# EUROPEAN PATENT APPLICATION

(11) **EP 3 011 827 A1**
(43) Date of publication of application: **27.04.2016**
(21) Application number: 14813876.1
(22) Date of filing: 22.05.2014
(51) Int. Cl.: A01G 9/24

(54) **AIR-CONDITIONING SYSTEM FOR GREENHOUSES**

(30) Priority: 21.06.2013 ES 201300584 P
(71) Applicant: New Growing Systems, S.L., 04640 Pulpi (Almeria) (ES)
(72) Inventor: BELMONTE MULA, Manuela, E-04640 Pulpi (Almeria) (ES)
(74) Representative: Gonzalez Palmero, Fé
(86) International application number: PCT/ES2014/000080
(87) International publication number: WO 2014/202801

(57) **Abstract**

The present invention relates to a temperature control system for greenhouses based on the accumulation of energy by means of providing water or any other liquid in reservoirs located either in the lower part of the greenhouse, in which case a raised floor below the cultivation level is necessary, or else in an accumulation reservoir consisting of a tank located outside the greenhouse. The liquid from the corresponding reservoir is circulated through the greenhouse by means of a heat exchange system, being able to heat/cool the air circulating therethrough and such air will in turn heat or cool the greenhouse.

## Description

### Object of the Invention

The present invention relates to a temperature control system for greenhouses based on storing a large amount of latent energy which is collected in a natural manner and given off, where appropriate and also in a natural manner, with minimum energy consumption, using to that end water or any other liquid stored in a reservoir located in the lower part of the greenhouse, specifically under a raised floor located below planting areas, or in an outdoor tank.

The system is provided for being applied preferably in hydroponic cultivation greenhouses where the plants are located in different types of receptacles located above the raised floor, although it can also be applied in any other cultivation system or type, provided that the plants are in pots, planters or other receptacles.

### Background of the Invention

A greenhouse includes a structure for supporting a plastic roof and plastic sides based on resistant sheets that allow light to enter fully.

It is evident that said sheets of plastic material have to withstand outdoor temperatures that are sometimes very low and other times very high, such that in those conditions, for example when indoor temperatures are very low, plant development slows down or is interrupted, even being able to freeze, so it is necessary to provide greenhouses with heating means that raise the indoor temperature thereof. Logically, when the outdoor temperature is high the inverse problem will occur, so in this case it is necessary to cool the inside of the greenhouse by means of air conditioning systems which, although they satisfactorily perform their function, they do so with high energy consumption which may be economically unviable as regards the installation of the air conditioning system.

### Description of the Invention

The proposed temperature control system provided for greenhouses is based on cooling/heating the air inside the greenhouse to the optimal cultivation temperature, circulating water or any other liquid which is stored in a container or reservoir as a liquid accumulator through heat exchangers by means of suctioning and driving using suitable pump means.

Specifically, in a first embodiment the liquid, preferably water, reservoir consists of accumulation bags located under a raised floor having holes for the exit of cold or hot air into the cultivation area, which is logically located above the raised floor. In another embodiment variant, the reservoir consists of an outdoor tank.

In any case, a motor pump has been provided for suctioning and driving the water from said reservoir to the heat exchange system, such system being based on air generators through which the cooled/heated water or liquid circulates, suctioning hot or cold air from the greenhouse and said air being cooled or heated as it goes through the corresponding radiator-type exchange surface, such that in the first embodiment variant the cold or hot air is circulated through the raised floor and forced to exit through holes provided in said raised floor towards the cultivation area, whereas in the second embodiment variant the cold or hot air is forced through plastic sleeves or sleeves made of another material to exit through holes towards the corresponding cultivation areas.

The system further includes the corresponding pipes or ducts for water transfer.

### Description of the Drawings

To complement the description that will be made below and for the purpose of aiding to better understand the features of the invention according to a preferred practical embodiment thereof, a set of drawings is attached as an integral part of said description in which the following is depicted in an illustrative and non-limiting manner:
Figure 1 depicts an example of part of a conventional greenhouse with the temperature control system object of the invention.
Figure 2 depicts an embodiment variant of the system of the invention.

### Preferred Embodiment of the Invention

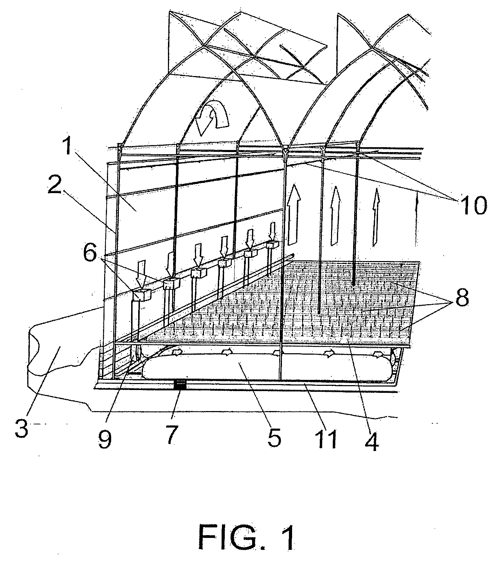

As can be seen in Figure 1, the temperature control system of the invention is provided to be applied in a plant cultivation greenhouse, including a general structure (1), as is conventional, as a support for an upper roof and side enclosure wall (2) of said structure (1) to form the greenhouse *per se,* including an original soil surface (3) on which there has been provided a raised floor (4) thereabove and spaced from same, such that between said original soil surface (3) and the raised floor (4) there is arranged a water or liquid accumulation system (5) based on containers, bags or other similar elements provided that they form a water or liquid reservoir or reservoirs.

The system further includes air generators (6) through which the cooled/heated water or liquid circulates, such that hot/cold air is suctioned out of the greenhouse through those air generators (6) and cooled/heated as it goes through a radiator-type exchange surface, such that the cold/hot air is circulated through the holes (8) of the raised floor (4) towards the cultivation areas of the greenhouse.

The system further includes a pump (7) for suctioning and driving the water or liquid towards the heat exchange system, as well as a suction manifold (11) for the hot/cold water or liquid from the reservoir or reservoirs.

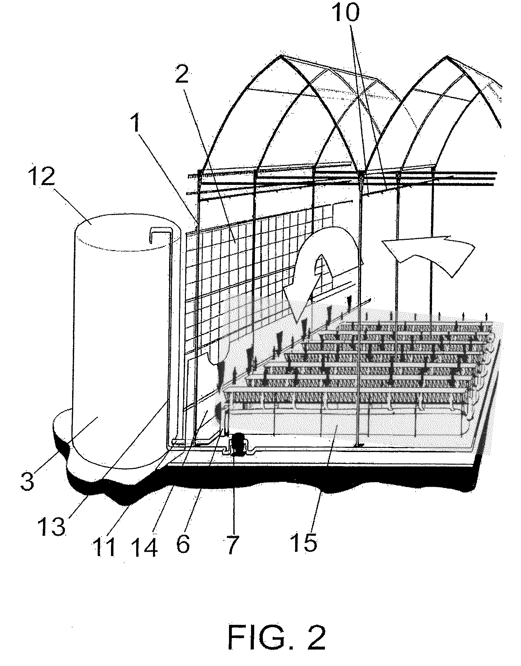

In an embodiment variant shown in Figure 2, the greenhouse comprises a reservoir consisting in this case of an outdoor tank (12) located outside the greenhouse, which is filled with water or liquid through a pipe (13).

In this embodiment variant, the structure of the greenhouse (1) with the side enclosure wall (2) is provided for being placed on an original soil surface (3), without artificial soil, where in correspondence with the cultivation area in this embodiment variant of Figure 2, there have laterally been provided a polycarbonate plate (14), the suction manifold and the system of air generators (6), the drive pump (7) and the area having outlet holes for the exit of air at the height of the crop also being seen. These outlet holes are provided in plastic sleeves (15).

In said embodiment variant the system suctions hot/cold air out of the greenhouse and it is cooled/heated as it goes through the radiator-type exchange surface, such that the cold/hot air is forced through sleeves (15) made of plastic or another material to exit through the outlet holes or openings towards the cultivation area.

According to the aforementioned features, the system of the invention is based on cooling/heating the air of the greenhouse to the optimal cultivation temperature by circulating water or any other liquid which is stored in the corresponding reservoir and driven by the drive pump (7) through the air generating elements (6).

The system can be for heating or cooling the air inside the greenhouse, the system working differently depending on whether the air in the greenhouse is to be cooled or heated.

The water the temperature of which has dropped is driven through the air generating elements once controlled at the desired temperature, lowering the temperature of the air circulating through said elements, and which air circulates through the lower part of the raised floor, exiting through the holes made in said raised floor towards the cultivation areas.

## Claims

1. A temperature control system for greenhouses, provided for cooling or heating air in a greenhouse when the temperature therein is high or low, respectively, **characterized in that** it comprises a liquid reservoir (5) or (12) as well as means for suctioning and driving said liquid towards a heat exchange system (6) for cooling/heating the air of the greenhouse itself according to the optimal cultivation temperature.

2. The temperature control system for greenhouses according to claim 1, **characterized in that** the heat exchange system is formed by air generators (6) through which cooled/heated liquid circulates, through which air generators (6) hot/cold air is suctioned out of the inside of the greenhouse for cooling/heating said air.

3. The temperature control system for greenhouses according to claims 1 and 2, **characterized in that** a raised floor (4) is included inside the greenhouse, below the cultivation level, said raised floor (4) having holes (8) for the exit of the cooled/heated air into the cultivation area.

4. The temperature control system for greenhouses according to claims 1, 2 and 3, **characterized in that** the reservoir consists of liquid accumulation bags (5) located below the level of the raised floor (4).

5. The temperature control system for greenhouses according to claims 1 and 2, **characterized in that** the liquid reservoir consists of an outdoor tank (12).

6. The temperature control system for greenhouses according to claim 1, **characterized in that** the means for suctioning and driving the liquid towards the heat exchange system (6) consist of a motor pump (7) combined with respective liquid transfer ducts.

7. The temperature control system for greenhouses according to claims 1, 5 and 6, **characterized in that** one or more plastic sleeves (15) is included to force the heated/cooled air flow into the cultivation area.
